# EUROPÄISCHE PATENTSCHRIFT

(11) **EP 2 527 661 B1**
(45) Veröffentlichungstag und Bekanntmachung des Hinweises auf die Patenterteilung: **27.04.2016**
(21) Anmeldenummer: 12003964.9
(22) Anmeldetag: 21.05.2012
(51) Int. Cl.: F15D 1/02, G01F 1/66, G01F 15/00

(54) **Hilfseinrichtung für Durchflussmessgeräte**
Auxiliary device for flow meters
Dispositif d'aide pour appareils de mesure du débit

(30) Priorität: 27.05.2011 DE 102011103859
(43) Veröffentlichungstag der Anmeldung: 28.11.2012
(73) Patentinhaber: Krohne AG, 4019 Basel (CH)
(72) Erfinder: de Boer, Geeuwke, 3904 JX Veenendaal (NL)
(74) Vertreter: Gesthuysen Patent- und Rechtsanwälte

(56) Entgegenhaltungen:
- DE-A1- 3 407 617
- US-A- 3 665 965
- US-A- 5 295 397
- US-A- 5 672 821
- US-A- 5 819 803

## Beschreibung

Die Erfindung betrifft eine Hilfseinrichtung für Durchflussmessgeräte nach Anspruch 1.

Durchflussmessgeräte sollen - wie andere Messgeräte auch - "gut funktionieren", und zwar über einen möglichst weiten Messbereich und über einen möglichst weiten Temperaturbereich (der Umgebung, in der das Durchflussmessgerät eingesetzt wird). Zum "guten Funktionieren" gehört vor allem, aber nicht nur, eine gute Nullpunktstabilität und ein geringer Messfehler.

Eingangs ist gesagt, dass es um eine Hilfseinrichtung für Durchflussmessgeräte geht Dabei kann es sich zum Beispiel um magnetisch-induktive Durchflussmessgeräte handeln. Von Bedeutung ist die Hilfseinrichtung, um die es erfindungsgemäß geht, aber insbesondere in Verbindung mit Ultraschall-Durchflussmessgeräten. Solche Ultraschall-Durchflussmessgeräte sind umfangreich bekannt. Dazu wird nur beispielhaft verwiesen auf die deutschen Offenllegungsschriften 195 03 714 und 10 2007 004 936, auf die amerikanische Offenlegungsschrift 2004/011.141, auf die amerikanischen Patentschriften 3,564,912, 5,546,812, 6,550,345 und 6,732,595 sowie auf die PCT-Offenlegungsschriften WO 98/19.296 und WO 00/03.206, insbesondere aber auf die deutsche Offenlegungsschrift 10 2007 004 936.

Wie ausgeführt, betrifft die Erfindung eine Hilfseinrichtung für Durchflussmessgeräte unterschiedlicher Art, zum Beispiel für magnetisch-induktive Durchflussmessgeräte, insbesondere aber für Ultraschall-Durchflussmessgeräte. Stets geht es um Durchflussmessgeräte, mit denen, in eine ein strömendes Medium führende Leitung eingebaut, der Durchfluss des strömenden Mediums durch diese Leitung gemessen werden soll. Dabei kann es sich bei dem strömenden Medium um ein flüssiges Medium, um ein gasförmiges Medium, um ein feste und/oder gasförmige Bestandteile enthaltendes flüssiges Medium oder um ein feste und/oder flüssige Bestandteile enthaltendes gasförmiges Medium handeln.

Betrifft die Erfindung, wie mehrfach ausgeführt, eine Hilfseinrichtung für Durchflussmessgeräte unterschiedlicher Art, so soll gleichwohl im folgenden, ohne dass damit eine Einschränkung verbunden wäre, immer von einem besonderen Durchflussmessgerät ausgegangen werden, nämlich einem Ultraschall-Durchflussmessgerät.

Für das "gute Funktionieren" von Durchflussmessgeräten ist die "Qualität der Strömung" des strömenden Mediums im Durchflussmessgerät von wesentlicher Bedeutung. Für die "Qualität der Strömung" soll im erfindungsgemäßen Zusammenhang von Bedeutung sein, ob es sich um eine laminare oder um eine turbulente Strömung handelt und wie der Geschwindigkeitsgradient der Strömung über dem Durchmesser bzw. dem Querschnitt des Durchflussmessgeräts aussieht.

Durchflussmessgeräte werden üblicherweise kalibriert oder es werden Berechnungsmethoden angewendet, die auf Standardbedingungen in Bezug auf den Geschwindigkeitsgradienten, also in Bezug auf die Geschwindigkeitsverteilung innerhalb des Strömungskanals basieren. Die am häufigsten verwendete Standardgeschwindigkeitsverteilung für Gase ist - bei hohen Reynoldszahlen - die sogenannte "vollentwickelte turbulente Strömung" (englisch: "fully developed turbulent flow"). Das ist ein stabiler Gleichgewichtszustand, der in einem langen geraden Rohr mit glatten Innenwänden nachgebildet werden kann. Abhängig von der Art des Durchflussmessgeräts ist dazu eine Länge des Strömungsweges erforderlich, die dem zehnfachen bis sogar dem vierzigfachen des Durchmessers des Strömungskanals entspricht

Für ein "gutes Funktionieren" von Durchflussmessgeräten ist aber nicht nur die "Qualität der Strömung" wichtig, es kommt vielmehr auch darauf an, ob nicht gewollte und zum eigentlichen Betrieb des Durchflussmessgeräts auch nicht gehörende Schallwellen oder Druckwellen, die in dem strömenden Medium auftreten, den Betrieb des Durchflussmessgeräts negativ beeinflussen, die insbesondere die Messgenauigkeit beeinflussen können, also das zu einem "guten Funktionieren" gehörende Kriterium "geringer Messfehler" negativ beeinflussen.

In die Leitungen, in die Durchflussmessgeräte der in Rede stehenden Art eingebaut sind, sind häufig auch, aus welchem Grund auch immer, Ventile, Klappen und/oder Drosseln eingebaut, Bauelemente, die im folgenden als "Störelemente" bezeichnet werden sollen, - "Störelemente" deshalb, weil sie einerseits die "Qualität der Strömung" negativ beeinflussen, weil sie andererseits Schallwellen erzeugen, die jedenfalls bei Ultraschall-Durchflussmessgeräten die der Messung dienenden Schallwellen mit dem Ergebnis darauf basierender Messfehler stören.

Eingangs ist ausgeführt, dass es erfindungsgemäß um Hilfseinrichtungen für Durchflussmessgeräte geht. Diese Hilfseinrichtungen können unterschiedlich ausgeführt sein. Eine Realisierungsmöglichkeit ist die, dass die Hilfseinrichtungen als für sich handhabbare Geräte in die Leitung eingebaut werden, in die auch die Durchflussmessgeräte eingebaut werden. Eine andere Realisierungsmöglichkeit besteht darin, die Hilfseinrichtungen nicht als für sich handhabbare Geräte auszuführen, vielmehr nur die die Hilfseinrichtung darstellenden Strömungsbeeinflussungselemente in die Leitungen einzubauen, in die auch die Durchflussmessgeräte eingebaut werden. Theoretisch denkbar ist es auch, die die erfindungsgemäßen Hilfseinrichtungen darstellenden Strömungsbeeinflussungselemente in den Durchflussmessgeräten selbst vorzusehen. Das führt aber nur bei einer relativ guten "Qualität der Strömung" und nur dann zu guten Ergebnissen, wenn die Störeinflüsse, zum Beispiel durch Ventile, Klappen oder Drosseln, relativ gering sind.

Wesentlicher Bestandteil der Hilfseinrichtungen für Durchflussmessgeräte, um die es vorliegend geht, sind die mit Ausnehmungen versehenen plattenoder scheibenförmigen Strömungsbeeinflussungselemente, wobei die Ausnehmungen in den Strömungsbeeinflussungselementen so ausgeführt sind und/oder die Strömungsbeeinflussungselemente so angeordnet sind, dass in Strömungsrichtung "keine freie Sichtlinie" gegeben ist. Zur Bedeutung von "keine freie Sichtlinie" folgendes:

Ultraschallwellen breiten sich in ähnlicher Weise aus wie Lichtstrahlen. Sind nun die Ausnehmungen in den Strömungsbeeinflussungselementen so ausgeführt und/oder die Strömungsbeeinflussungselemente so angeordnet, dass in Strömungsrichtung "keine freie Sichtlinie" gegeben ist, so können Ultraschallwellen, wie auch Lichtstrahlen, sich nicht ungehindert ausbreiten, also ungehindert von "Störelemente" darstellenden Ventilen, Klappen und/oder Drosseln zu den Durchflussmessgeräten gelangen. Die, wie beschrieben, ausgeführten und/oder angeordneten Strömungsbeeinflussungselemente machen also die Durchflussmessgeräte für von den "Störelementen" ausgehende "Störeinflüsse" gleichsam "blind".

Wie einleitend ausgeführt, sind die Strömungsbeeinflussungselemente stromabwärts und/oder stromaufwärts angeordnet. Die Sinnhaftigkeit der Anordnung der Strömungsbeeinflussungselemente stromaufwärts, also - in Strömungsrichtung gesehen - vor den Durchflussmessgeräten, ist offensichtlich. Aber auch die Anordnung der Strömungsbeeinflussungselemente stromabwärts, also - in Strömungsrichtung gesehen - hinter den Durchflussmessgeräten, macht Sinn, weil nämlich die "Störeinflüsse" sich mit einer im Vergleich zur Geschwindigkeit des strömenden Mediums sehr hohen Geschwindigkeit ausbreiten.

Hilfseinrichtungen für Durchflussmessgeräte der Art, von der die Erfindung ausgeht, sind umfangreich bekannt zum Beispiel aus US-A-5 672 821, oder von Law's Spearman, K-Lap, CPA, BTB, Zanker, Gallagher. Bei dem bekannten Hilfseinrichtungen der in rede stehenden Art sind die Ausnehmungen in den Strömungsbeeinflussungselementen kreisförmig ausgerührt.

Die bekannten Hilfseinrichtungen für Durchflussmessgeräte, von denen die Erfindung ausgeht, sind in Bezug auf ihren Zweck, zu einem "guten Funktionieren" von Durchflussmessgeräten beizutragen, noch nicht optimal. Folglich liegt der Erfindung die Aufgabe zugrunde, die in Rede stehende Hilfseinrichtung so auszugestalten, weiterzubilden und zu verbessern, dass damit einerseits eine Verbesserung der "Qualität der Strömung" erreicht wird, vor allem aber andererseits die negative Auswirkung von "Störeinflüssen", insbesondere resultierend aus Ventilen, Klappen und/oder Drosseln in der Leitung, in die ein Durchflussmessgerät eingebaut ist, reduziert, weitgehend reduziert oder gar, wenn möglich, eliminiert werden.

Die erfindungsgemäße Hilfseinrichtung für Durchflussmessegräte ist zunächst und im Wesentlichen dadurch gekennzeichnet, dass die Ausnehmungen in den Strömungsbeeinflussungselementen als radial verlaufende Schlitze ausgeführt sind. Vorzugsweise haben die Schlitze in den Strömungsbeeinflussungselementen ein Seitenverhältnis (Verhältnis der Länge zur Breite) von >1, vorzugsweise von wesentlich >1.

Von Bedeutung für die erfindungsgemäße Hilfseinrichtung ist auch die Orientierung der als Schlitze ausgeführten Ausnehmungen in den Strömungsbeeinflussungselementen. Die Längsrichtung der Schlitze verläuft zumindest annähernd radial, insbesondere exakt radial. Dadurch werden die Komponenten der radialen Geschwindigkeit (Turbulenz) im Strömungsfeld unmittelbar stromabwärts der Strömungsbeeinflussungselemente reduziert, und dadurch wird verhindert, dass Energie zur Ausbildung von Schallwellen in senkrechter Richtung zur Achse der Leitung zur Verfügung gestellt wird, die, falls vorhanden, Schallwellen mit erheblicher Amplitude verursachen können.

Verlaufen die Schlitze in den Strömungsbeeinflussungselementen radial, so empfiehlt sich eine Ausführungsform, bei der die Breite der Schlitze in radialer Richtung zunimmt, vorzugsweise entsprechend dem Radius der Strömungsbeeinflussungselemente zunimmt.

Mit der Geometrie der in den Strömungsbeeinflussungselementen realisierten Schlitze lässt sich die "Qualität der Strömung" erheblich beeinflussen. Folglich kann es auch angezeigt sein, in Bezug auf die Breite der Schlitze in den Strömungsbeeinflussungselementen in radialer Richtung eine andere Ausgestaltung als die zu wählen, bei der die Breite der Schlitze in radialer Richtung zunimmt. So kann eine Ausgestaltung gewählt werden, bei der die Breite der Schlitze in den Strömungsbeeinflussungselementen in radialer Richtung zunächst zunimmt, vorzugsweise proportional zum Radius zunimmt, dann aber in radialer Richtung wieder abnimmt, vorzugsweise proportional zum Radius abnimmt

Die Leitungen, in denen Durchflussmessegräte eingebaut sind, haben in aller Regel einen kreisförmigen Querschnitt. Davon wird im Folgenden ausgegangen, - wenn auch ein kreisförmiger Querschnitt nicht zwingend ist.

Die Anzahl der als Schlitze ausgeführten Ausnehmungen in den Strömungsbeeinflussungselementen macht man zweckmäßigerweise auch abhängig vom Durchmesser der Leitung, in die ein Durchflussmessgerät eingebaut ist, und damit abhängig vom Durchmesser der Strömungsbeeinflussungselemente.

In aller Regel wird man dafür sorgen, dass die die erfindungsgemäße Hilfseinrichtung im Wesentlichen darstellenden Strömungsbeeinflussungselemente rotationssymmetrisch sind und dass die als Schlitze ausgeführten Ausnehmungen in den Strömungsbeeinflussungselementen rotationssymmetrisch ausgeführt sind. Man wird also vorzugsweise die Schlitze in den Strömungsbeeinflussungselementen auf einem konzentrischen Kreisring realisieren, - konzentrisch zum Mittelpunkt der Strömungsbeeinflussungselemente.

Hat die Leitung, in die ein Durchflussmessgerät eingebaut ist, einen relativ geringen Durchmesser, so kann es ausreichend sein, die Schlitze in den Strömungsbeeinflussungselementen auf einem (Zahlwort) konzentrischen Kreisring zu realisieren. Bei einem größeren Durchmesser der Leitung empfiehlt sich eine Ausführungsform, bei der die Schlitze in den Strömungsbeeinflussungselementen auf mehreren zueinander konzentrischen Kreisringen realisiert sind; es können zwei oder drei konzentrische Kreisringe sein, bei einem besonders großen Durchmesser der Leitung können es auch noch mehr konzentrische Kreisringe sein, auf denen die Schlitze in den Strömungsbeeinflussungselementen realisiert sind. Jedenfalls empfiehlt sich eine Ausführungsform, bei der die Anzahl der Schlitze, die in den Strömungsbeeinflussungselementen auf zueinander konzentrischen Kreisringen realisiert sind, von innen nach außen zunimmt. Zum Beispiel können innen sechs Schlitze, auf dem mittleren Kreisring zwölf Schlitze und auf dem äußeren Kreisring vierundzwanzig Schlitze realisiert sein.

Schließlich empfiehlt es sich, bei der erfindungsgemäßen Hilfseinrichtung für Durchflussmessgeräte zwischen den Strömungsbeeinflussungselementen noch schallabsorbierendes und/oder schalldämpfendes Material vorzusehen.

Im Einzelnen gibt es verschiedene Möglichkeiten, die erfindungsgemäße Hilfseinrichtung für Durchflussmessgeräte auszugestalten und weiterzubilden. dazu wird verwiesen einerseits auf die dem Patentanspruch 1 nachgeordneten Patentansprüche, andererseits auf ein nachfolgend beschriebenes und in der Zeichnung dargestelltes Ausführungsbeispiel. In der Zeichnung zeigen
- Fig. 1: eine bevorzugte Ausführungsform eines ersten, zu einer erfindungsgemäßen Hilfseinrichtung gehörenden Strömungsbeeinflussungselements,
- Fig. 2: eine bevorzugte Ausfürungsform eines zweiten, zusätzlich zu dem Strömungsbeeinflussungselement nach Fig. 1 zu einer erfindungsgemäßen Hilfseinrichtung gehörenden Strömungsbeeinflussungselements,
- Fig. 3: einen Ausschnitt aus dem Strömungsbeeinflussungselement nach Fig. 1,
- Fig. 4: einen Ausschnitt aus dem Strömungsbeeinflussungselement nach Fig. 2 und
- Fig. 5: eine der Fig. 3 entsprechende Darstellung, in die die "winkelmäßigen Abstände" der einzelnen Schlitze eingetragen sind.

Erfindungsgemäß geht es um eine Hilfseinrichtung für Durchflussmessgeräte nach Anspruch 1.

Durchflussmessgeräte sollen, wie im Einzelnen einleitend ausgeführt, "gut funktionieren". Für das "gute Funktionieren" von Durchflussmessgeräten ist, wie ebenfalls einleitend ausgeführt, die "Qualität der Strömung" des strömenden Mediums im Durchflussmessgerät von wesentlicher Bedeutung. Weiter ist einleitend auch ausgeführt, dass für ein "gutes Funktionieren" von Durchflussmessgeräten nicht nur die "Qualität der Strömung" wichtig ist, dass es vielmehr auch darauf ankommt, ob nicht gewollte und zum eigentlichen Betrieb des Durchflussmessgeräts auch nicht gehörende Schallwellen oder Druckwellen, die in dem strömenden Medium auftreten, den Betrieb des Durchflussmessgeräts negativ beeinflussen.

Ferner ist eingangs erläutert, dass die erfindungsgemäßen Hilfseinrichtungen unterschiedlich ausgeführt sein können, dass nämlich eine erste Realisierungsmöglichkeit dadurch gekennzeichnet ist, dass die Hilfseinrichtungen als für sich handhabbare Geräte in die Leitung eingebaut werden, in die auch die Durchflussmessgeräte eingebaut werden, dass eine andere Realisierungsmöglichkeit dadurch gekennzeichnet ist, dass die die Hilfseinrichtung darstellenden Strömungsbeeinflussungselemente unmittelbar in die Leitungen eingebaut werden, in die auch die Durchflussmessgeräte eingebaut werden, und dass es theoretisch auch denkbar ist, die die erfindungsgemäßen Hilfseinrichtungen darstellenden Strömungsbeeinflussungselemente in den Durchflussmessgeräten selbst vorzusehen. Dargestellt ist und beschrieben wird die zweite Ausführungsform, also die Ausführungsform, die dadurch gekennzeichnet ist, dass die die Hilfseinrichtung darstellenden Strömungsbeeinflussungselemente 1, 2 in die - nicht dargestellten - Leitungen eingebaut werden, in die auch die - nicht dargestellten - Durchflussmessgeräte eingebaut werden.

Schließlich ist einleitend ausgeführt, welche Bedeutung es hat, dass die Ausnehmungen in den Strömungsbeeinflussungselementen so ausgeführt sind und/oder die Strömungsbeeinflussungselemente so angeordnet sind, dass in Strömungsrichtung "keine freie Sichtlinie" gegeben ist, dass also die, wie beschrieben, ausgeführten und/oder angeordneten Strömungsbeeinflussungselemente die Durchflussmessgeräte für von "Störelementen" ausgehende "Störeinflüsse" gleichsam "blind" machen.

Bei dem Ausführungsbeispiel, das in den Figuren dargestellt ist, bilden die Strömungsbeeinflussungselemente 1 und 2 eine erfindungsgemäße Hilfseinrichtung. Dabei gilt, dass die Strömungsbeeinflussungselemente 1 und 2 eine zweite Ausführungsform einer erfindungsgemäßen Hilfseinrichtung bilden. Für beide Ausführungsformen gilt, dass die Strömungsbeeinflussungselemente 1 und 2 hintereinander angeordnet sind, und dass die Strömungsbeeinflussungselemente 1 und 2 stromabwärts, stromaufwärts oder stromabwärts und stromaufwärts des - nicht dargestellten - Durchflussmessgeräts vorgesehen sein können.

Für die erfindungsgemäßen Hilfseinrichtungen für Durchflussmessgeräte ist zunächst wesentlich, dass die Ausnehmungen in den Strömungsbeeinflussungselementen 1 und 2 als Schlitze 3 bzw. 4 ausgeführt sind. Dabei haben die Schlitze 3 bzw. 4 ein Seitenverhältnis (Verhältnis der Länge zur Breite) von >1, im dargestellten Ausführungsbeispiel von wesentlich >1. Für das dargestellte Ausführungsbeispiel gilt auch, dass die Längsrichtung der Schlitze 3 bzw. 4 radial verläuft und dass die Breite der Schlitze 3 bzw. 4 in radialer Richtung zunimmt, und zwar - zunächst - proportional zum Radius der Strömungsbeeinflussungselemente 1, 2 zunimmt. Teilweise gilt, dass die Breite der Schlitze 3 bzw. 4 zunächst proportional zum Radius der Strömungsbeeinflussungselemente 1, 2 zunimmt, dann aber wieder abnimmt, und zwar proportional zum Radius.

Im Übrigen gilt für das Ausführungsbeispiel, dass die Schlitze 3 bzw. 4 in den Strömungsbeeinflussungselementen 1 und 2 auf konzentrischen Kreisringen realisiert sind, und zwar auf drei Kreisringen. Dabei gilt weiter, dass die Anzahl der Schlitze 3 bzw. 4, die in den Strömungsbeeinflussungselementen 1 und 2 auf den zueinander konzentrischen Kreisringen realisiert sind, von innen nach außen zunimmt; innen sind sechs Schlitze 3 bzw. 4, auf dem mittleren Kreisring zwölf Schlitze 3 bzw. 4 und auf dem äußeren Kreisring vierundzwanzig Schlitze 3 bzw. 4 realisiert.

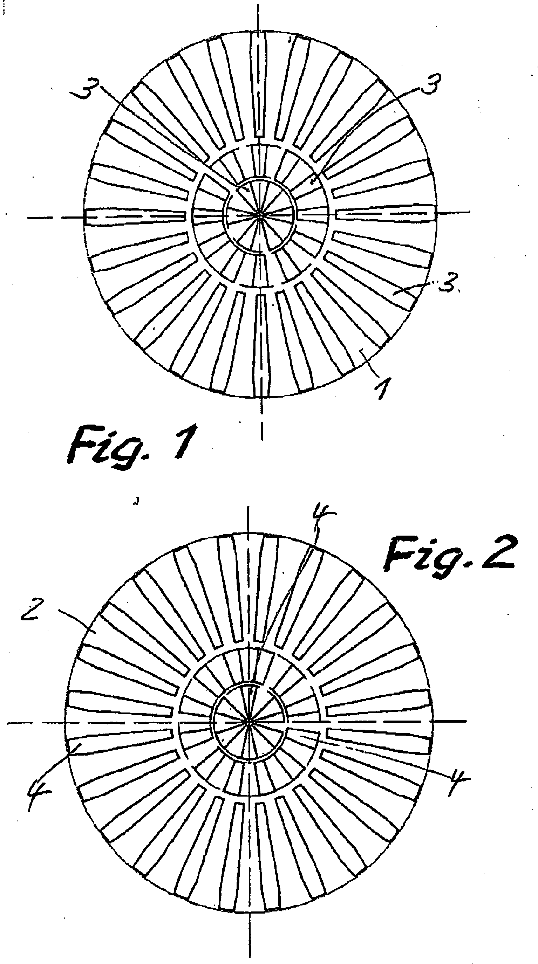

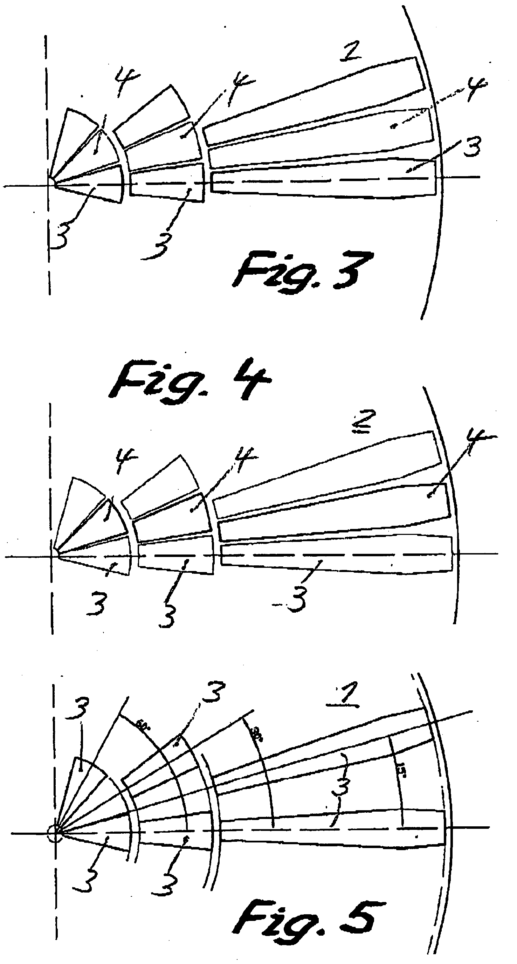

Vergleicht man das Strömungsbeeinflussungselement 2 in Fig. 2 mit dem Strömungsbeeinflussungselement 1 in Fig. 1 bzw. den Ausschnitt in Fig. 4 mit dem Ausschnitt in Fig. 3, so wird unmittelbar deutlich, dass die versetzte Anordnung der Schlitze 3 bzw. 4 dazu führt, dass in Strömungsrichtung "keine freie Sichtlinie" gegeben ist. In der Fig. 3 sind die in dem Strömungsbeeinflussungselement 1 realisierten Schlitze 3 deutlich erkennbar. Demgegenüber sind die in dem Strömungsbeeinflussungselement 2, das ausschnittsweise in Fig. 4 dargestellt ist, realisierten Schlitze 4 nur angedeutet. Umgekehrt sind in Fig. 4 die in dem Strömungsbeeinflussungselement 2 realisierten Schlitze 4 deutlich erkennbar, während die in dem Strömungsbeeinflussungselement 1, das ausschnittsweise in Fig. 3 dargestellt ist, realisierten Schlitze 3 nur angedeutet sind.

Ergänzend sei noch darauf hingewiesen, dass zwar bei dem Ausführungsbeispiel nur zwei Strömungsbeeinflussungselemente 1 und 2 vorgesehen sind, dass die erfindungsgemäße Hilfseinrichtung darauf jedoch nicht beschränkt ist, dass ohne weiteres auch drei, vier, fünf oder mehr Strömungsbeeinflussungselemente vorgesehen werden können.

Schließlich sei noch darauf hingewiesen, dass bei erfindungsgemäßen Hilfseinrichtungen für Durchflussmessgeräte zwischen den Strömungsbeeinflussungselementen schallabsorbierendes und/oder schalldämpfendes Material vorgesehen sein kann, was jedoch nicht dargestellt ist.

## Patentansprüche

1. Hilfseinrichtung für Durchflussmessgeräte, insbesondere für Ultraschall-Durchflussmessgeräte, bestehend aus mindestens zwei hintereinander angeordneten, stromabwärts und/oder stromaufwärts des Durchflussmessgeräts vorgesehenen, mit als Schlitze ausgeführten Ausnehmungen versehenen, platten- oder scheibenförmigen Strömungsbeeinflussungselementen, wobei die Ausnehmungen in den Strömungsbeeinflussungselementen so ausgeführt sind und/oder die Strömungsbeeinflussungselemente so angeordnet sind, dass in Strömungsrichtung keine freie Sichtlinie gegeben ist.
**dadurch gekennzeichnet,**
**dass** die Längsrichtung der Schlitze (3, 4) zumindest annähernd radial verläuft, vorzugsweise radial verläuft.

2. Hilfseinrichtung für Durchflussmessgeräte nach Anspruch 1, **dadurch gekennzeichnet, dass** die Schlitze (3, 4) ein Seitenverhältnis (Verhältnis der Länge zur Breite) von >1, vorzugsweise von wesentlich >1, haben.

3. Hilfseinrichtung für Durchflussmessgeräte nach Anspruch 1 oder 2, **dadurch gekennzeichnet, dass** die Breite der Schlitze (3, 4) in radialer Richtung zunimmt, vorzugsweise proportional zum Radius der Strömungsbeeinflussungselemente (1, 2) zunimmt.

4. Hilfseinrichtung für Durchflussmessgeräte nach Anspruch 3, **dadurch gekennzeichnet, dass** die Breite der Schlitze (3, 4) zunächst zunimmt, vorzugsweise proportional zum Radius zunimmt, dann aber in radialer Richtung wieder abnimmt, vorzugsweise proportional zum Radius abnimmt.

5. Hilfseinrichtung für Durchflussmessgeräte nach einem der Ansprüche 1 bis 4, **dadurch gekennzeichnet, dass** die Schlitze (3, 4) in den Strömungsbeeinflussungselementen (1, 2) auf einem konzentrischen Kreisring realisiert sind.

6. Hilfseinrichtung für Durchflussmessgeräte nach Anspruch 5, **dadurch gekennzeichnet, dass** die Schlitze (3, 4) in den Strömungsbeeinflussungselementen (1, 2) auf mehreren zueinander konzentrischen Kreisringen realisiert sind.

7. Hilfseinrichtung für Durchflussmessgeräte nach Anspruch 6, **dadurch gekennzeichnet, dass** die Anzahl der Schlitze (3,4), die in den Strömungsbeeinflussungselementen (1, 2) auf zueinander konzentrischen Kreisen realisiert sind, von innen nach außen zunimmt.

8. Hilfseinrichtung für Durchflussmessgeräte nach Anspruch 7, **dadurch gekennzeichnet, dass** innen sechs Schlitze (3, 4), auf dem mittleren Kreisring zwölf Schlitze (3, 4) und auf dem äußeren Kreisring vierundzwanzig Schlitze (3,4) realisiert sind.

9. Hilfseinrichtung für Durchflussmessgeräte nach einem der Ansprüche 1 bis 8, **dadurch gekennzeichnet, dass** zwischen den Strömungsbeeinflussungselementen (1, 2) schallabsorbierendes und/oder schalldämpfendes Material vorgesehen ist.

## Claims

1. Accessory apparatus for flowmeters, in particular ultrasonic flowmeters comprising at least two successively arranged, plate-shaped or diskshaped flow influencing elements provided with recesses designed as slots and adapted for being located downstream and/or upstream of the flowmeter, wherein the recesses in the flow influencing elements are made and/or the flow influencing elements are arranged such that they eliminate a free line of sight in the flow direction,
**characterized in**
**that** the longitudinal direction of the slots (3, 4) runs substantially radially, preferably runs radially.

2. Accessory apparatus for flowmeters according to claim 1, **characterized in that** the slots (3, 4) have an aspect ratio (ratio of length to width) that is greater than 1, preferably significantly greater than 1.

3. Accessory apparatus for flowmeters according to claim 1 or 2, **characterized in that** the width of the slots (3, 4) increases in the radial direction, preferably increases in proportion to the radius of the flow influencing elements (1, 2).

4. Accessory apparatus for flowmeters according to claim 3, **characterized in that** the width of the slots (3, 4) first increases, preferably increases in proportion to the radius, and then decreases again in the radial direction, preferably decreases in proportion to the radius.

5. Accessory apparatus for flowmeters according to any one of claims 1 to 4, **characterized in that** the slots (3, 4) in the flow influencing elements (1, 2) are implemented on a concentric circular ring.

6. Accessory apparatus for flowmeters according to claim 5, **characterized in that** the slots (3, 4) in the flow influencing elements (1, 2) are implemented on a plurality of circular rings that are concentric to one another.

7. Accessory apparatus for flowmeters according to claim 6, **characterized in that** the number of slots (3, 4) that are implemented on circular rings that are concentric to one another in the flow influencing elements (1, 2) increases outwardly.

8. Accessory apparatus for flowmeters according to claim 7, **characterized in that** six slots (3, 4) are provided on the innermost ring, twelve slots(3, 4) on a middle ring and twenty four slots (3, 4) on the outermost ring.

9. Accessory apparatus for flowmeters according to any one of claims 1 to 8, **characterized in that** sound-absorbing and/or noise-damping material is provided between the flow influencing elements (1, 2).

## Revendications

1. Dispositif d'aide pour appareils de mesure du débit, en particulier pour appareils de mesure du débit à ultrasons, constitué d'au moins deux éléments influençant l'écoulement disposés les uns derrière les autres, en aval et/ou en amont de l'appareil de mesure du débit, pourvus d'évidements réalisés sous forme de fentes, en forme de plaques ou de disques, les évidements dans les éléments influençant l'écoulement étant réalisés de telle sorte et/ou les éléments influençant l'écoulement étant disposés de telle sorte qu'il n'existe aucune ligne de visée libre dans la direction de l'écoulement,
**caractérisé en ce que**
la direction longitudinale des fentes (3, 4) s'étend au moins approximativement radialement, de préférence s'étend radialement.

2. Dispositif d'aide pour appareils de mesure du débit selon la revendication 1, **caractérisé en ce que** les fentes (3, 4) présentent un rapport des côtés (rapport de la longueur à la largeur) > 1, de préférence essentiellement > 1.

3. Dispositif d'aide pour appareils de mesure du débit selon la revendication 1 ou 2, **caractérisé en ce que** la largeur des fentes (3, 4) augmente dans la direction radiale, de préférence augmente proportionnellement au rayon des éléments influençant l'écoulement (1, 2).

4. Dispositif d'aide pour appareils de mesure du débit selon la revendication 3, **caractérisé en ce que** la largeur des fentes (3, 4) augmente d'abord, de préférence augmente proportionnellement au rayon, puis diminue à nouveau dans la direction radiale, de préférence proportionnellement au rayon.

5. Dispositif d'aide pour appareils de mesure du débit selon l'une quelconque des revendications 1 à 4, **caractérisé en ce que** les fentes (3, 4) sont réalisées dans les éléments influençant l'écoulement (1, 2) sur un anneau circulaire concentrique.

6. Dispositif d'aide pour appareils de mesure de débit selon la revendication 5, **caractérisé en ce que** les fentes (3, 4) sont réalisées dans les éléments influençant l'écoulement (1, 2) sur plusieurs anneaux circulaires concentriques les uns aux autres.

7. Dispositif d'aide pour appareils de mesure de débit selon la revendication 6, **caractérisé en ce que** le nombre de fentes (3, 4) qui sont réalisées dans les éléments influençant l'écoulement (1, 2) sur des cercles concentriques les uns aux autres augmente de l'intérieur vers l'extérieur.

8. Dispositif d'aide pour appareils de mesure de débit selon la revendication 7, **caractérisé en ce que** six fentes (3, 4) sont réalisées à l'intérieur, douze fentes (3, 4) sur l'anneau circulaire central et vingt-quatre fentes (3, 4) sur l'anneau circulaire extérieur.

9. Dispositif d'aide pour appareils de mesure de débit selon l'une quelconque des revendications 1 à 8, **caractérisé en ce qu'**entre les éléments influençant l'écoulement (1, 2) est prévu un matériau absorbant les sons et/ou atténuant les sons.
